(19) Europäisches Patentamt
European Patent Office
Office européen des brevets

(11) Veröffentlichungsnummer: **0 061 999**
**B1**

(12) **EUROPÄISCHE PATENTSCHRIFT**

(45) Veröffentlichungstag der Patentschrift: **03.07.85**

(51) Int. Cl.[4]: **C 09 B 45/14,** D 06 P 3/32, D 06 P 3/30

(21) Anmeldenummer: **82810123.8**

(22) Anmeldetag: **17.03.82**

(54) **Verwendung von 1:2-Chrom- oder -Kobaltkomplexfarbstoffen zum Färben von Leder oder Pelzen.**

(30) Priorität: **23.03.81 CH 1951/81**

(43) Veröffentlichungstag der Anmeldung: **06.10.82 Patentblatt 82/40**

(45) Bekanntmachung des Hinweises auf die Patenterteilung: **03.07.85 Patentblatt 85/27**

(84) Benannte Vertragsstaaten: **CH DE FR GB IT LI**

(56) Entgegenhaltungen:
**FR - A - 981 117**
**FR - A - 1 083 983**
**FR - A - 1 220 529**
**FR - A - 1 269 496**
**US - A - 3 051 696**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Püntener, Alois, Dr., Pulverweg 13, CH-4310 Rheinfelden (CH)**

**EP 0 061 999 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft die Verwendung von Farbstoffen der Formel I

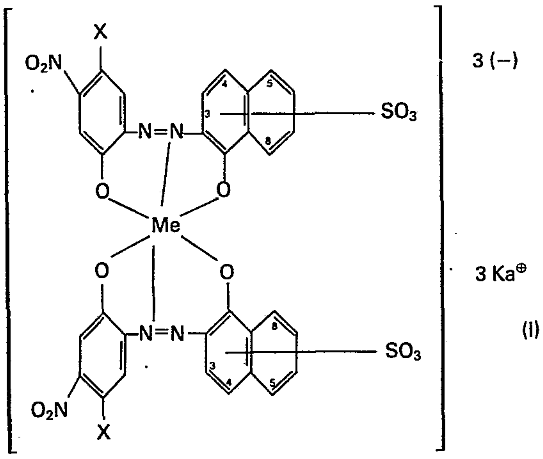

(I)

worin Me Chrom oder Kobalt, Ka$^{\oplus}$ ein Katoin und X Wasserstoff, Chlor, Methyl oder Methoxy bedeutet und worin die $SO_3H$-Gruppen in 3,4,5- oder 8-Stellung angeordnet sind, zum Färben von Leder oder Pelzen.

X bedeutet vorzugsweise Wasserstoff und insbesondere Chlor und die $SO_3H$-Gruppen sind bevorzugt in 5-Stellung, insbesondere in 4-Stellung angeordnet.

Ka$^{\oplus}$ bedeutet vorzugsweise Lithium, oder vor allem Natrium oder Kalium. Ferner kann Ka$^{\oplus}$ ein Ammoniumkation oder das Ammoniumsalz eines organischen Amins sein.

Die Farbstoffe werden auf übliche Weise hergestellt, z.B. indem man die metallfreien Azofarbstoffe im Verhältnis 1:2 mit einem chrom- oder kobalt-abgebenden Mittel umsetzt, beispielsweise mit Kobaltsulfat oder -acetat oder Chromsulfat oder -formiat, in schwach alkalischer, neutraler oder schwach saurer Lösung.

Die oben erwähnten einfachen Salze können auch in Gegenwart von Komplexbildnern, wie z.B. Weinsäure, Salicylsäure oder Milchsäure, oder als Komplexsalze, wie Chromsalicylsäure, verwendet werden. Die metallabgebenden Mittel werden in stöchiometrischer Menge oder im Überschuss eingesetzt. Es können Gemische oder einheitliche Monoazofarbstoffe metallisiert werden. Im ersten Fall erhält man ein Gemisch von symmetrischen und asymmetrischen Metallkomplexen. Reine asymmetrische Komplexe erhält man, indem man nach bekannter Methode zuerst den 1:1 Komplex und dann mit weiterem Monoazofarbstoff den entsprechenden 1:2 Komplex herstellt. Gewünschtenfalls können auch Gemische von metallabgebenden Mitteln eingesetzt werden.

Die 1:2-Chrom- oder -Kobaltkomplexe werden zum Färben von Pelzen oder vorzugsweise von Leder verwendet, wobei alle Ledersorten geeignet sind, z.B. Chromleder, nachgegerbtes Leder oder Velourleder von Ziege, Rind oder Schwein.

Man erhält blaue oder violette Färbungen sehr guter Echtheiten, insbesondere Licht- und Nassechtheiten.

Die bevorzugte Verwendung der Farbstoffe liegt im Färben von Leder mit Farbstoffmischungen, insbesondere im Gemisch mit einem roten und einem gelben oder gelb-braunen 1:2-Metallkomplex-Farbstoff, womit erstmals das Trichromiefärben von Leder ermöglicht wird. Unter roten Farbstoffen sind in diesem Zusammenhang alle orangefarbenen bis rotbraunen Farbstoffe zu verstehen.

Vorzugsweise verwendet man eine Farbstoffmischung, enthaltend

a) einen blauen oder violetten 1:2 Metallkomplex der oben angegebenen Formel I,

b) einen roten 1:2-Chrom- oder -Kobaltkomplex des Farbstoffes der Formel II

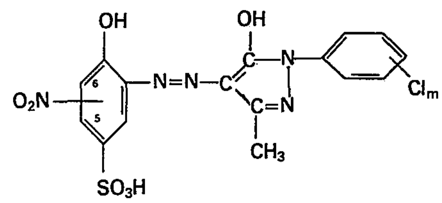

(II)

worin m eine ganze Zahl von 0 bis 2 bedeutet und die Nitrogruppe in 5- oder 6-Stellung angeordnet ist, sowie

c) einen gelben 1:2-Kobaltkomplex des Farbstoffes der Formel III

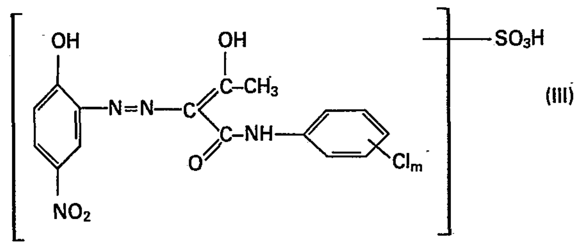

(III)

worin m die oben angegebene Bedeutung hat, oder einen gelb-braunen 1:2-Kobalt- oder orangen Chromkomplex des Farbstoffes der Formel IV

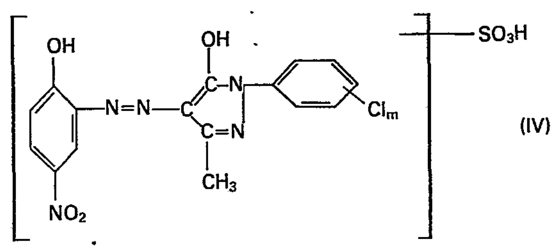

(IV)

worin m die oben angegebene Bedeutung hat.

Aus der FR-A-1.269.496 sind bereits ähnliche Farbstoffe bekannt, wobei jedoch alle konkret offenbarten Farbstoffe eine Nitrogruppe in 4- oder 6-Stellung des 1-Hydroxy-2-aminobenzols enthalten, nicht jedoch in 5-Stellung. Die besondere Eignung der erfindungsgemässen Farbstoffe zum Färben von Leder oder Pelzen konnte dieser Literaturstelle also nicht entnommen werden.

Die nachfolgenden Beispiele dienen der Erläuterung der Erfindung. Teile bedeuten Gewichtsteile und Prozente Gewichtsprozente. Die Temperaturen sind in Grad Celsius angegeben.

Beispiel 1

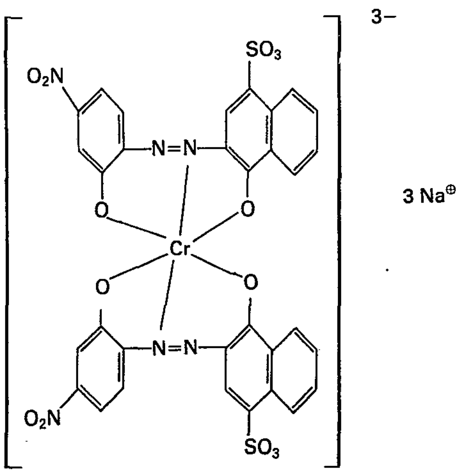

39 Teile des Monoazofarbstoffes, erhalten durch Diazotierung von 5-Nitro-2-amino-1-hydroxybenzol und Kupplung mit 1-Napthol-4-sulfonsäure werden unter Zusatz von Natriumhydroxid in 1000 Teilen 80° warmem Wasser gelöst und mit 120 Teilen einer Lösung von chromsalicylsaurem Natrium mit einem Chromgehalt von 2,6% versetzt. Die Reaktionslösung wird so lange unter Rückfluss gehalten, bis die Metallisierung beendet ist.

Nachdem das Wasser am Rotationsverdampfer abgezogen ist, erhält man ein dunkles Pulver, welches Leder in einem blauen Farbton mit guten Echtheiten färbt.

Wird eine wässrige Lösung dieses Farbstoffes mit Kaliumchlorid versetzt, so fällt ein Farbstoff aus, bei dem das Natriumion grösstenteils durch das entsprechende Kaliumion verdrängt wurde. Die Nuance der Färbung bleibt erhalten, und die resultierenden Echtheiten sind gleichwertig.

Beispiel 2

Verwendet man im obigen Beispiel an Stelle von chromsalicylsaurem Natrium 60 Teile einer 1-molaren Kobaltsulfatlösung, so erhält man unter gleichen Reaktionsbedingungen den entsprechenden Kobaltkomplex, der Leder in einem violetten Farbton mit vorzüglichen Echtheiten färbt.

Beispiele 3 bis 18

Arbeitet man wie in den Beispielen 1 und 2 beschrieben, verwendet jedoch die in der folgenden Tabelle aufgeführten Monoazofarbstoffe, so erhält man nach Metallisierung mit dem in Spalte 3 angegebenen Metall 1:2-Metallkomplexfarbstoffe, welche Leder in den in Spalte 4 angegebenen Nuancen färben.

| Beispiel | Monoazofarbstoff | Metall | Nuance |
|---|---|---|---|
| 3 | 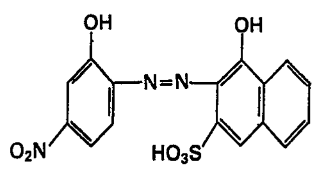 | Cr | blau |
| 4 | 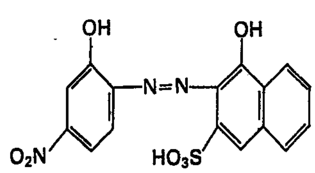 | Co | violett |
| 5 | 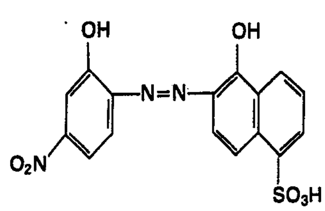 | Cr | blau |

| Beispiel | Monoazofarbstoff | Metall | Nuance |
|---|---|---|---|
| 6 | 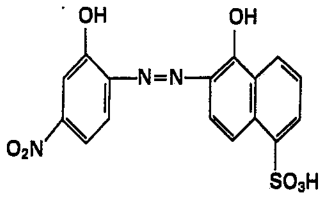 | Co | violett |
| 7 | 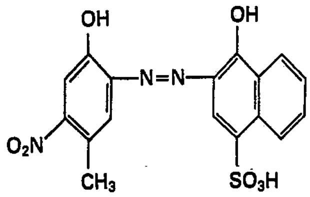 | Cr | blau |
| 8 | 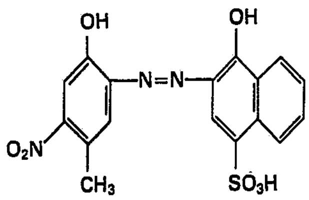 | Co | violett |
| 9 | 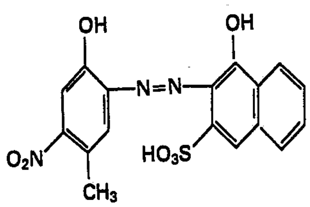 | Cr | blau |
| 10 | 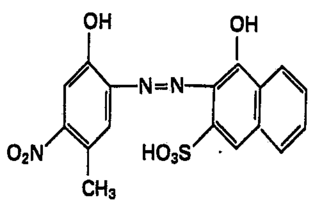 | Co | violett |
| 11 | 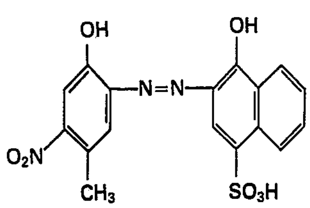 | Cr | blau |

| Beispiel | Monoazofarbstoff | Metall | Nuance |
|---|---|---|---|
| 12 | 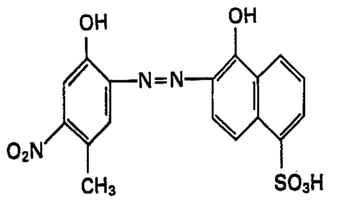 | Co | violett |
| 13 | 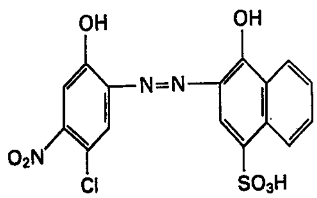 | Cr | blau |
| 14 | 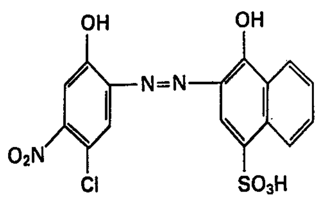 | Co | violett |
| 15 | 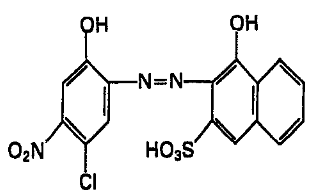 | Cr | blau |
| 16 | 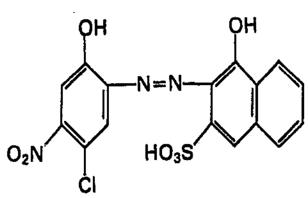 | Co | violett |
| 17 | 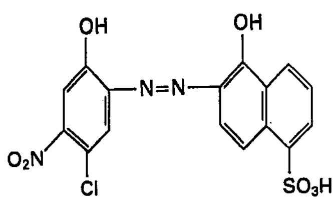 | Cr | blau |

| Beispiel | Monoazofarbstoff | Metall | Nuance |
|---|---|---|---|
| 18 | 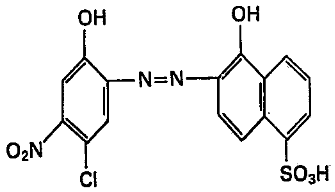 | Co | violett |

Beispiel 19

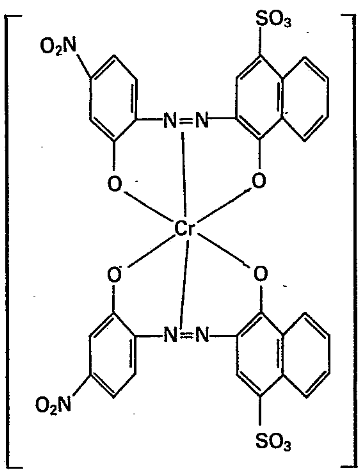

$3\ominus$

$3\ Na^{\oplus}$

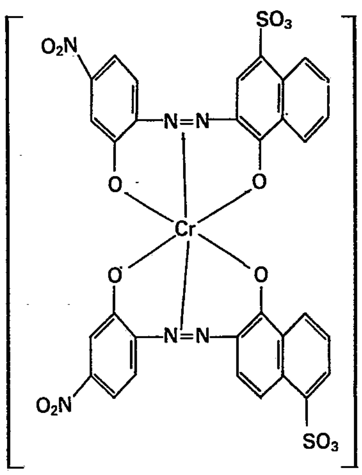

$3\ominus$

$3\ Na^{\oplus}$

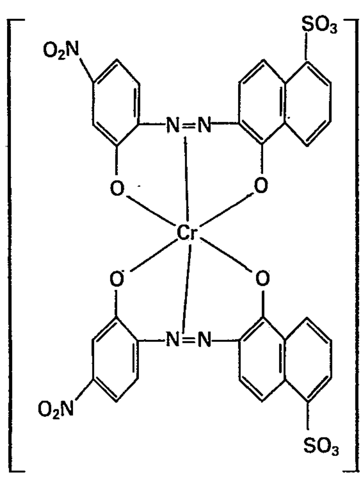

$3\ominus$

$3\ Na^{\oplus}$

19.5 Teile des Monoazofarbstoffes, erhalten durch Diazotierung von 5-Nitro-2-amino-1-hydroxybenzol und Kupplung mit 1-Naphthol-4-sulfonsäure, und 19.5 Teile das Monoazofarbstoffes, erhalten durch Diazotierung von 5-Nitro-2-amino-1-hydroxybenzol und Kupplung mit 1-Naphthol-5-sulfonsäure, werden unter Zugabe von Natriumhydroxid in 1000 Teilen Wasser gelöst und wie im Beispiel 1 metallisiert und isoliert. Das entsprechende Farbstoffgemisch mit Kalium als Kation ist ebenfalls nach Beispiel 1 erhältlich. Leder wird von beiden Mischungen im gleichen blauen Farbton mit sehr guten Echtheiten angefärbt.

Beispiel 20

Verwendet man im obigen Beispiel an Stelle von chromsalicylsaurem Natrium 60 Teile einer 1-molaren Kobaltsulfatlösung, so erhält man unter gleichen Reaktionsbedingungen die entsprechende Kobaltkomplexmischung, die Leder in einem violetten Farbton färbt.

Beispiel 21

In 1000 Teilen Wasser werden nacheinander die komplexe 1:1 Chromverbindung, welche 39 Teile des Farbstoffes aus diazotiertem 5-Nitro-2-amino-1-hydroxybenzol und 1-Naphthol-4-sulfonsäure sowie 5.2 Teile Chrom enthält, und 42,5 Teile des Monoazofarbstoff, erhalten durch Diazotierung von 4-Chlor-5-nitro-2-amino-1-hydroxybenzol und Kupplung auf 1-Napthol-4-sulfonsäure, eingetragen und auf 80° erwärmt. Der pH-Wert wird mit 2-normaler Natronlauge bei 7–7.5 gehalten. Nach Beendigung der Anlagerung zum 1:2 Metallkomplexfarbstoff wird das Wasser am Rotationsverdampfer abgezogen. Der Farbstoff färbt Leder in einem blauen Farbton mit guten Echtheiten.

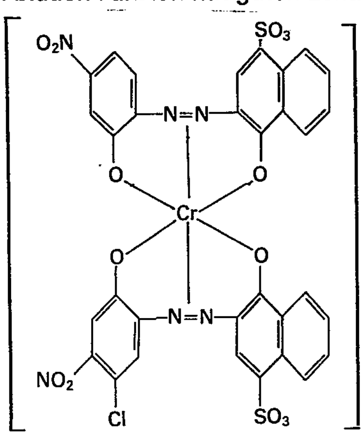

$3\ominus$

$3\ NA^{\oplus}$

Arbeitet man wie im letzten Absatz von Beispiel 1 beschrieben, so erhält man den entsprechenden Farbstoff mit Kalium als Kation. Die Nuance der mit diesem Farbstoff erhaltenen Lederfärbung ist gleich und die Echtheiten gleichwertig.

Beispiele 22–26

Farbstoffe mit ähnlichen Eigenschaften erhält man, wenn man in analoger Weise den 1:1 Chromkomplex des in Kolonne 1 genannten Azofarbstoffes mit dem in Kolonne 2 genannten Azofarbstoff umsetzt. Man erhält 1:2 Chromkomplexe, welche Leder mit guten Echtheiten blau färben.

| Beispiel | 1:1 Chromkomplex des Azofarbstoffes | Azofarbstoff |
|---|---|---|
| 22 | 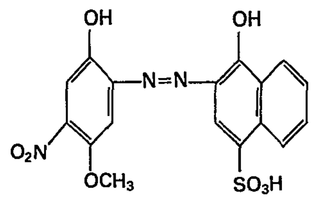 | 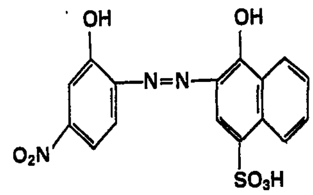 |
| 23 | 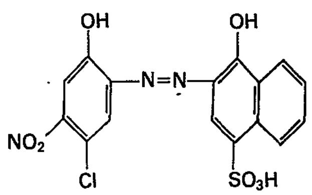 | 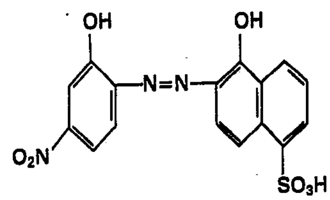 |
| 24 | 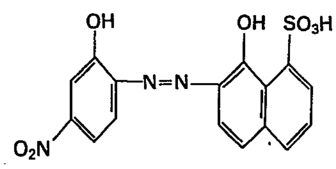 | 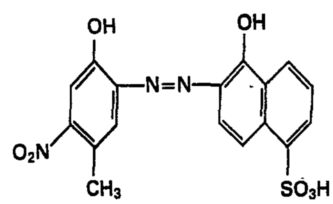 |
| 25 | 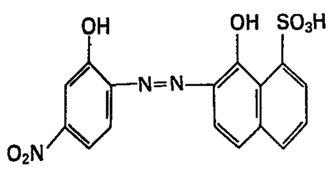 | 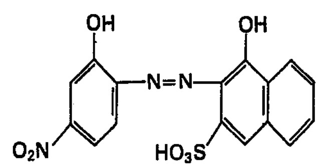 |
| 26 | 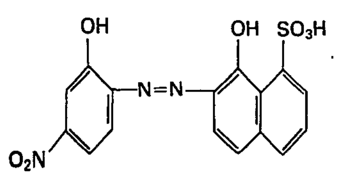 | 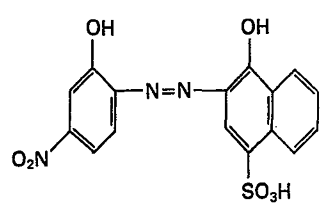 |

Färbevorschrift für Leder:

100 Teile Bekleidungsvelourleder werden bei 50° in einer Lösung von 1000 Teilen Wasser und 2 Teilen 24%igem Ammoniak während 2 Stunden aufgewalkt und anschliessend bei 60° in einer Lösung von 1000 Teilen Wasser, 2 Teilen 24%igem Ammoniak und 3 Teilen Farbstoff des Beispiels 1 während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50° behandelt. Man erhält eine blaue Färbung mit guten Echtheiten.

## Patentansprüche

1. Verwendung von Farbstoffen der Formel

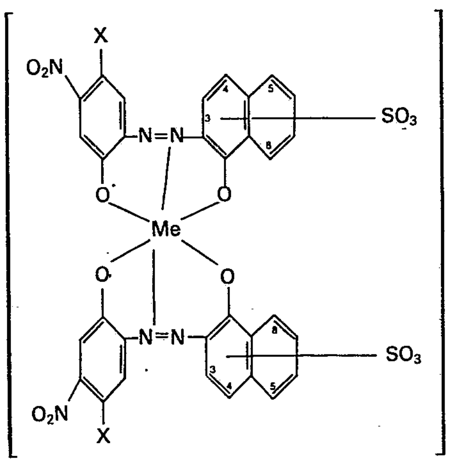

3 (–)

3 Ka$^{\oplus}$

(I)

worin Me Chrom oder Kobalt, Ka$^{\oplus}$ ein Kation und X Wasserstoff, Chlor, Methyl oder Methoxy bedeutet und worin die $SO_3H$-Gruppen in 3, 4, 5 oder 8-Stellung angeordnet sind, zum Färben von Leder oder Pelzen.

2. Verwendung gemäss Anspruch 1 von Farbstoffen der Formel I, worin X Wasserstoff oder vorzugsweise Chlor bedeutet.

3. Verwendung gemäss Ansprüchen 1 oder 2 von Farbstoffen der Formel I, worin die -$SO_3H$-Gruppen in 5-Stellung oder insbesondere in 4-Stellung angeordnet sind.

4. Verwendung gemäss Ansprüchen 1 bis 3 von Farbstoffen der Formel I, worin X Chlor bedeutet und die $SO_3H$-Gruppen in 4-Stellung angeordnet sind.

5. Verwendung gemäss Ansprüchen 1 bis 3 von Farbstoffen der Formel I, worin X Wasserstoff bedeutet und die $SO_3H$-Gruppen in 4-Stellung angeordnet sind.

6. Verwendung von Farbstoffen der Formel I zum Färben von Leder.

## Claims

1. Use of a dye of the formula

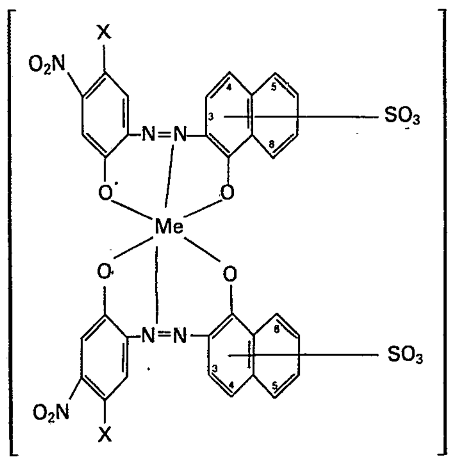

3 (–)

3 Ka$^{\oplus}$

(I)

in which Me is chromium or cobalt, Ka$^{\oplus}$ is a cation and X is hydrogen, chlorine, methyl or methoxy, and in which the $SO_3H$ groups are located in the 3-, 4-, 5- or 8-positions, for dyeing leather or furs.

2. Use according to claim 1 of a dye of the formula I, in which X is hydrogen or, preferably, chlorine.

3. Use according to either of claims 1 or 2 of a dye of the formula I, in which the $SO_3H$ groups are located in the 5-position or, most preferably, in the 4-position.

4. Use according to any one of claims 1 to 3 of a dye of the formula I, in which X is chlorine and the $SO_3H$ groups are located in the 4-position.

5. Use according to any one of claims 1 to 3 of a dye of the formula I, in which X is hydrogen and the $SO_3H$ groups are located in the 4-position.

6. Use of a dye of the formula I for dyeing leather.

## Revendications

1. Utilisation de colorants de formule I

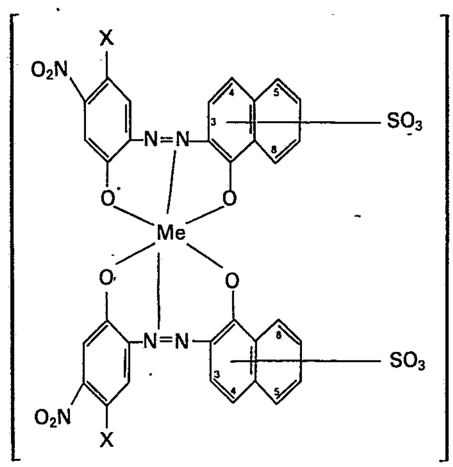

3 (–)

3 Ka$^{\oplus}$

(I)

dans laquelle Me représente du chrome ou du cobalt, Ka$^{\oplus}$ un cation et X l'hydrogène, le chlore, un radical méthyle ou méthoxy, et dans laquelle les groupes $SO_3H$ sont placés en position 3, 4, 5 ou 8, pour la teinture du cuir ou des fourrures.

2. Utilisation selon la revendication 1, de colorants de formule I, dans laquelle X représente l'hydrogène ou de préférence le chlore.

3. Utilisation selon les revendications 1 ou 2 de colorants de formule I, dans laquelle les groupes $-SO_3H$ sont placés en position 5 ou en particulier en position 4.

4. Utilisation selon les revendications 1 à 3 de colorants de formule I, dans laquelle X représente le chlore et les groupes $SO_3H$ sont placés en position 4.

5. Utilisation selon les revendications 1 à 3 de colorants de formule I, dans laquelle X représente l'hydrogène et les groupes $SO_3H$ sont placés en position 4.

6. Utilisation de colorants de formule I pour la teinture du cuir.